(19) Europäisches Patentamt
European Patent Office
Office européen des brevets

(11) **EP 3 032 816 A1**

(12) **EUROPEAN PATENT APPLICATION**

(43) Date of publication:
**15.06.2016  Bulletin 2016/24**

(51) Int Cl.:
**H04N 1/60** (2006.01)

(21) Application number: **14307011.8**

(22) Date of filing: **12.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Briand, Gerard**
 **35576 Cesson Sevigne Cedex (FR)**

• **Hellier, Pierre**
 **35576 Cesson Sevigne Cedex (FR)**
• **Mollet, Nicolas**
 **35576 Cesson Sevigne Cedex (FR)**

(74) Representative: **Huchet, Anne**
**Technicolor**
**1, rue Jeanne d'Arc**
**92443 Issy-les-Moulineaux Cedex (FR)**

(54) **Method for adapting a pre-captured videos to current lighting conditions**

(57)   The present disclosure relates to a method for displaying at least one image of a video representing a scene, said video being derived from a first video representing said scene acquired at a first date under first lighting conditions, the method comprising:
- acquiring (S1) at least one image, called reference image, of said scene at a second date under second lighting conditions, said second date being subsequent to said first date,
- determining (S2) a color transformation matrix M to be applied to the color values of pixels of at least one image of the first video,
- applying (S3) said color transformation matrix to said at least one image of the first video in order to make the lighting conditions of the scene in the transformed image correspond substantially to the second lighting conditions, and
- displaying (S4) the transformed image.

FIG.1

**Description**

**1. Technical Field**

The present disclosure relates generally to the field of video processing.

**2. Background Art**

Accessing to information via the Internet from anywhere and at any time, coupled with the facility and intelligence of portable devices such as smartphones and tablets has led to new applications including that of augmented reality (AR). AR consists of adding virtual content as computer generated images (CGI) to natural content like video that can be captured by the user with his device. This technique is quite complex because requiring a precise estimation and tracking of the camera position in real time in order to get a reliable and realistic mixing of the video and CGI content.

So a new way to simulate an AR application is to play an interactive video that has been pre-captured at the same location and that can be preloaded on the end user device. Such content can be 360° videos as proposed by the application developed by the company Onspot (see https://www.facebook.com/onspotapp). This application allows a viewer to watch videos shot in the exact position where he is located, thanks to a camera capable of shooting in all directions. The viewer is then completely immersed in the video and can turn its attention where he wants. Whatever the movements of the viewer, the real and the virtual are synchronous thanks to the gyroscope and the compass of his smartphone. This application is particularly useful for tourism industry. For example, it allows visitors immersing in virtual reconstructions in historical sites.

In such application, the user who is required to respect a relatively precise position on the site can rotate to change his view point in the 360° scene. The pre-captured video shot from the same position is augmented with additional elements that can be either natural or pure graphics. This operation can be performed offline through specialized post-production tools or when shooting by adding natural elements in the scene. These additional elements are for example texts on parts of the scene in the pre-captured video. The text can deal with historical or architectural aspects of some parts of the scene. For example, if the scene shows a skyscraper, the added text can give the height of the building and its date of building. Another known example of additional elements is the introduction of a music band playing in the scene. The user can be virtually positioned at the middle of the scene and navigate using his device as if he was capturing himself the music band playing in this scene. The navigation in this 360° video makes use of different sensors of the smartphone as the compass, the gyroscope or the zoom.

Although the 360° video is realistic some differences with the current configuration of the site can sometimes be noticed, especially when light conditions are different. Indeed the conditions at the time of the visit and those at the period of capturing the video can actually be different. In such case, the video that should faithfully reproduce the environment is getting less realistic, and that could even be visually disruptive in case the discrepancy would be too large.

Current based AR video solutions do not propose any processing to compensate this discrepancy.

A purpose of the present disclosure is to propose a method for compensating at least partially this discrepancy in order to improve the immersion of the user in the pre-captured video.

**3. Summary**

According to the present disclosure, it is proposed to modify the color values of the pre-captured video in order to adapt it to other lighting conditions.

The consistency of the lighting conditions of the pre-captured video with the current lighting conditions will improve the user's immersion in the pre-captured video.

The present disclosure proposes a method for displaying at least one image of a video representing a scene, said video being derived from a first video representing said scene acquired at a first date under first lighting conditions, the method comprising:

- acquiring at least one image, called reference image, of said scene at a second date under second lighting conditions, said second date being subsequent to said first date,
- determining a color transformation matrix M to be applied to the color values of pixels of at least one image of the first video, said color transformation matrix M being determined such that the deviation between the color values of the pixels of the transformed image and the color values of the pixels of said at least one reference image are lower than a predefined threshold,
- applying said color transformation matrix to said at least one image of the first video in order to make the lighting conditions of the scene in the transformed image correspond substantially to the second lighting conditions, and
- displaying the transformed image.

Thus the difference of lighting conditions between the first date (date of the first video or pre-captured video) and the second date (which may be the current date) is compensated by applying a color transformation matrix to the images of the first video (pre-captured video).

According to a first embodiment, the color transformation matrix M is determined by

$$\operatorname*{argmin}_{M} \sum_{x \in C} |R(x) - M(I(x))|^2$$

where R(x) is the color value of a pixel x of the reference image R, I(x) is the color value of a pixel x of one image I of the first video and C is the set of pixels x within the images R and I.

If

Advantageously, before determining the color transformation matrix M, the image I is geometrically aligned on the reference image R and the color transformation matrix M is determined by

$$\operatorname*{argmin}_{M} \sum_{x \in C} \left| R(x) - M(\tilde{I}(x)) \right|^2$$

where $\tilde{I}$ is the aligned image I of the first video.

In one particular embodiment, the images I and R are geometrically aligned by the steps of:

- detecting at least one interest point in the reference image R and at least one interest point in the image I, and
- matching said at least one interest point in the image I with said at least one interest point in the reference image R.

In one particular embodiment, if said first video is augmented by at least one additional element at a third date comprised between the first date and the second date, said at least additional element modifying pixels of images of the first video, the set C comprises pixels other than said modified pixels. For example, if virtual content elements or text elements are added in the first video to obtain an augmented reality video, the pixels from which the color transformation matrix is determined are pixels that are not impacted by these additional elements.

In another embodiment, the color transformation matrix M is determined differently. In this embodiment, the determination of the color transformation matrix M comprises the steps of:

- selecting a group of pixels of said at least one image of the first video according to a first selection criterion,
- computing the mean gray level of the selected pixels of said at least one image of the first video;
- selecting a group of pixels of said at least one reference image according to the first selection criterion,
- computing the mean gray level of the selected pixels of said at least one reference image, and
- determining the color transformation matrix from the mean gray level of the selected pixels of said at least one image of the first video and the mean gray level of the selected pixels of said at least one reference image.

Advantageously, if said first video is augmented by at least one additional element at a third date comprised between the first date and the second date, said at least additional element modifying pixels of images of the first video, said modified pixels are excluded from the selected pixels of said at least one image of the first video.

The present disclosure concerns also a device for displaying at least one image of a video representing a scene, said video being derived from a first video representing said scene acquired at a first date under first lighting conditions, the device comprising:

- means for acquiring at least one image, called reference image, of said scene at a second date under second lighting conditions, said second date being subsequent to said first date,
- means for determining a color transformation matrix M to be applied to the color values of pixels of at least one image of the first video, said color transformation matrix M being determined such that the deviation between the color values of the pixels of the transformed image and the color values of the pixels of said at least one reference image are lower than a predefined threshold,
- means for applying said color transformation matrix to said at least one image of the first video in order to make the lighting conditions of the scene in the transformed image correspond substantially to the second lighting conditions, and
- means for displaying the transformed image.

The present disclosure concerns also a device for displaying at least one image of a video representing a scene, said video being derived from a first video representing said scene acquired at a first date under first lighting conditions, the device comprising:

- a picture capturing device, e.g. a photosensor array, acquiring at least one image, called reference image, of said scene at a second date under second lighting conditions, said second date being subsequent to said first date,
- at least one processor determining a color transformation matrix M to be applied to the color values of pixels of at least one image of the first video, said color transformation matrix M being determined such that the deviation between the color values of the pixels of the transformed image and the color values of the pixels of said at least one reference image are lower than a predefined threshold,

- at least one processor applying said color transformation matrix to said at least one image of the first video in order to make the lighting conditions of the scene in the transformed image correspond substantially to the second lighting conditions, and
- a display device displaying the transformed image.

The present disclosure also relates to a computer program product comprising instructions of program code for execution by at least one processor to perform the method of displaying at least one image of a video representing a scene, when the program is executed on a computer.

The present disclosure also relates to a processor readable medium having stored therein instructions for causing a processor to perform the method of displaying at least one image of a video representing a scene.

While not explicitly described, the present embodiments may be employed in any combination or subcombination.

## 4. Brief description of the drawings

The present disclosure can be better understood with reference to the following description and drawings, given by way of example and not limiting the scope of protection, and in which:

- Figure 1 is a flow chart of the steps of the inventive method; and

- Figure 2 is a schematic view of a device for implementing the method of Figure 1.

The components in the figures are not necessarily to scale, emphasis instead being placed upon illustrating the principles of the present disclosure.

## 5. Description of embodiments

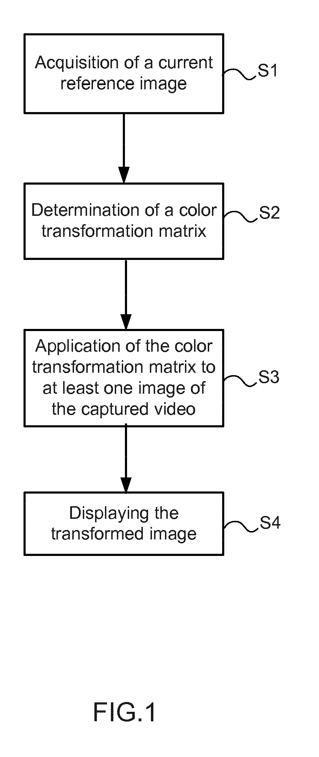

The present disclosure aims at improving the user's immersion when displaying at a given date a video of a scene captured at a previous date and more specifically when the user is present on the scene's site. A flow chart of the inventive method is shown on **Figure 1.** The pre-captured video (captured at a first date) is modified in order to make the lighting conditions of the scene in this video correspond substantially to the lighting conditions of the scene at a second date (for example at a current date). These lighting conditions depend from the time of the day or the night the video is captured. They may also depend from the season, the weather... And they can change between two dates.

In the video captured at the first date, the scene is acquired under first lighting conditions. The lighting conditions at a second date subsequent to the first date are likely to be different. This second date may be the current date. The video, called first video, captured at a first date is a video provided by a server. This first video is for example a video captured by a tour operator which is made available to the operator's clients.

According to a step S1, at least one image, called reference image, of the scene is acquired at the second date under second lighting conditions. This image is captured by the user present on the site via its smartphone or a tablet or a laptop. In that case, the second date is the current date. The reference image is preferably captured from the same geographical position as the one from which the first video has been captured and preferably with the same orientation in the 3D space. These spatial coordinates can be captured by the GPS receiver or the gyroscope of the capturing device. They may be provided together with the first video by the tour operator. This position and this orientation may be retrieved via the GPS receiver or the gyroscope of his smartphone, tablet or laptop.

According to a step S2, a color transformation matrix M is determined in order to modify the color values of pixels of at least one image of the first video.

According to a step S3, the color transformation matrix M is applied to pixels of at least one image of the first video.

The matrix M is determined such that the deviation between the color values of the pixels of the transformed image and the color values of the pixels of the reference image are lower than a predefined threshold T. The matrix M is applied to at least one image of the first video in order to make the lighting conditions of the scene in the transformed image (generated at step S3) correspond substantially to the lighting conditions of the scene in the reference image (captured at step S1). Two ways of determining the matrix M will be described later in the present document.

In the last step, referenced S4, the transformed image is displayed. The transformed image is displayed at the second date or at a later date. It is displayed on a smartphone, a tablet or a laptop of the user.

The steps S3 and S4 can be applied to a plurality of images or to all the images of the first video.

As mentioned above, the matrix M can be determined in different ways.

According to a first embodiment, the color transformation matrix M is determined by the following equation

**(Equation 1)**

$$\operatorname*{argmin}_{M} \sum_{x \in C} \left| R(x) - M\big(I(x)\big) \right|^2$$

where

- R(x) is the color value of a pixel x of the reference image R,
- I(x) is the color value of a pixel x of one image I of the first video, and
- C is a set of pixels x within the images R and I.

In this embodiment, the threshold T, defined above, is substantially equal to zero. The matrix M is 4x4 color transformation matrix in homogeneous coordinates.

Before determining the color transformation matrix M, the image I is preferably geometrically aligned on the reference image R. In this case, the color transformation matrix M is determined by the following equation

**(Equation 2)**

$$\operatorname*{argmin}_{M} \sum_{x \in C} \left| R(x) - M\big(\tilde{I}(x)\big) \right|^2$$

where $\tilde{I}$ is the aligned image I of the first video.

Different known methods can be used for aligning the images R and I. The images I and R are for example geometrically aligned by the steps of:

- detecting at least one interest point in the reference image R and at least one interest point in the image I, and
- matching said at least one interest point in the image I with said at least one interest point in the reference image R.

This geometrical alignment helps improving the minimization of the difference $|R(x)\text{-}M(I(x))|$.

In addition, if the first video is augmented (at a third date comprised between the first date and the second date) by additional elements such as virtual content elements or text elements to achieve an augmented reality video, the pixels whose color value is modified by these additional elements are excluded from the set C. This also helps improving the minimization of the difference $|R(x)\text{-}M(I(x))|$. For example, if a music band is added in the first video by the tour operator, the pixels associated with the objects that will not be present in the reference image are excluded from the set C.

According to another embodiment, the matrix M is computed based on the mean gray level of selected pixels of the reference image R and the mean gray level of selected pixels of the image I of the first video. An illuminant is estimated for each one of the images R and I based on the so called gray world algorithm disclosed in the document "Robust automatic white balance algorithm using gray color points in images", Huo, J. Y., Chang, Y. L., Wang, J., & Wei, X. X., IEEE Transactions on Consumer Electronics, Vol.52, No.2, pages 541-546, May 2006. and the matrix M is determined based on these two estimated illuminants.

In the gray world algorithm, pixels in the YUV color space meeting the following condition are selected in the following image:

$$\frac{|U| + |V|}{Y} < T \qquad (1)$$

where T is a threshold between 0 and 1.

The YUV color space used to extract gray points could be replaced by any other color space. In that case the above condition must be modified accordingly. For the Lab and RGB color spaces, the condition becomes respectively:

$$\frac{|a| + |b|}{L} < T \qquad (2)$$

And

$$\sqrt{\frac{2(R^2 + G^2 + B^2 - RG - RB - GB)}{3}} < T \qquad (3)$$

Then the mean gray level of the selected pixels of image R and the mean gray level of the selected pixels of image I are computed. The mean gray level of the image R is computed once while a mean gray level will be possibly computed for a plurality of images I of the first video (pre-captured video).

Then, the color transformation M is determined by:

$$M = M_A{}^{-1} \begin{bmatrix} \rho_d / \rho_s & 0 & 0 \\ 0 & \gamma_d / \gamma_s & 0 \\ 0 & 0 & \beta_d / \beta_s \end{bmatrix} M_A$$

$$\begin{bmatrix} \rho_s \\ \gamma_s \\ \beta_s \end{bmatrix} = M_A \begin{bmatrix} X_{WS} \\ Y_{WS} \\ Z_{WS} \end{bmatrix} \qquad \begin{bmatrix} \rho_d \\ \gamma_d \\ \beta_d \end{bmatrix} = M_A \begin{bmatrix} X_{WD} \\ Y_{WD} \\ Z_{WD} \end{bmatrix}$$

where

- $M_A$ is a CAT transformation matrix to LMS cone space such as the matrix CAT02, Bradford, CMCCAT2000 and Sharp well-known in the literature, and
- the row vectors $(X_{WS}, Y_{WS}, Z_{WS})$ and $(X_{WD}, Y_{WD}, Z_{WD})$ are respectively the estimated white points of the images I and R in XYZ color space.

In this embodiment, the matrix M is applied to at least one image I of the pre-captured video.

More details for this transformation, with illustrated examples can be found in the website of Jason Su's CAT Project: http://web.stanford.edu/-sujason/ColorBalancing/adaptation.h tml

As a generalization of this embodiment, it is possible to compute the mean of the p-norm in finite dimensions of the gray levels satisfying the conditions (1) or (2) or (3) instead of computing their mean gray level.

As for the previous embodiment, some pixels of the image I can be excluded from the pixels selection process when they have been modified by the addition of elements (virtual elements, text elements...) in the image I.

The implementation of the above-described method can be done in various ways.

The method can be implemented by the user device which is for example a smartphone or a laptop. The first video (pre-captured) is downloaded on the user device. In the case of a first video on a touristic site, this download can be done before the trip or on the site. Then, when the user is on the site, he captures at least one image (reference image) of the site via his smartphone or laptop, and the transformation of the first video (computation and application of the matrix M) is performed on the fly by the user device itself as the first video is played.

In another solution, all the computation operations are performed on a distant computer of the provider of the first video (for example, the tour operator) or on any computer or server on the cloud. In that case, when captured, the reference image R is downloaded to this computer. The computer performs the transformation of the first video and the transformed video is then downloaded to the user device. The advantage of this solution is that it does not require a powerful user device since the computations are made on distant computers.

For these two solutions, the user captures a reference image at a current date (when present on the site) and this current image is used for amending the color values of the first video captured at a previous date.

In a variant, the reference image is not an image captured at a current date (when present on the site) but is an image captured by webcams present on the site some days before the trip or the visit. The user takes preferably an image corresponding to the time at which the visit will be done. This reference image is retrieved from the web some days before the visit such that the transformation operations of the first video can be performed offline. And the transformed image is downloaded on the user device before or during the visit.

In another variant, the reference image can be picked up from a database of images of the site under different lighting or weather conditions.

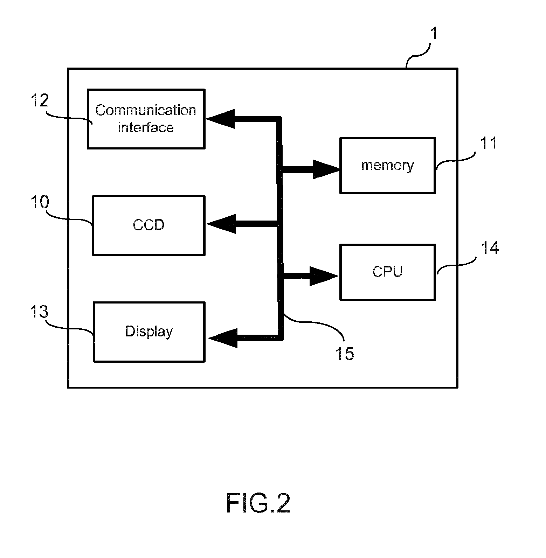

**Figure 2** illustrates schematically an exemplary hardware embodiment of a device 1 arranged to compute and display a transformed image as described before. This embodiment comprises a plurality of modules that can be present in a single device, i.e. the user device, or on a plurality of devices.

The device 1 comprises:

- a picture capturing circuit 10 such as a CCD sensor or a CMOS sensor;

- a local memory 11, e.g. a video memory and/or a RAM memory and/or a ROM memory and/or a flash memory;

- a communication interface 12, e.g. a wired interface (for example a bus interface, a wide area network interface, a local area network interface) or a wireless interface (such as a IEEE 802.11 interface or a Bluetooth interface);

- a display circuit 13; and

- one or more processing units 14, for example a CPU and/or a GPU and/or a DSP.

All these circuits are connected via a bus 15.

The reference image R is captured by the picture capturing circuit 10 and the first video is downloaded in the device via the communication interface 12. These images are stored in the local memory 11. The color transformation matrix M is determined and applied to at least one image I of the first video by the processing unit 14. The transformed video is stored in the local memory 11 and displayed on the display circuit 13.

As explained before, the first video can be transformed in a distant server. In that case, the reference image R captured by picture capturing circuit 10 is transmitted to the distant server via the communication interface 12. The color transformation to be applied to the first video is determined by the processing units of the distant server. This color transformation is applied to the first video on the distant server and the transformed video is then transmitted to the user device via the communication interface 12. The transformed video is then played by the user device.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. Method for displaying at least one image of a video representing a scene, said video being derived from a first video representing said scene acquired at a first date under first lighting conditions, the method comprising:

   - acquiring (S1) at least one image, called reference image, of said scene at a second date under second lighting conditions, said second date being subsequent to said first date,
   - determining (S2) a color transformation matrix M to be applied to the color values of pixels of at least one image of the first video, said color transformation matrix M being determined such that the deviation between the color values of the pixels of the transformed image and the color values of the pixels of said at least one reference image are lower than a predefined threshold,
   - applying (S3) said color transformation matrix to said at least one image of the first video in order to make the lighting conditions of the scene in the transformed image correspond substantially to the second lighting conditions, and
   - displaying (S4) the transformed image.

2. Method according to claim 1, wherein the color transformation matrix M is determined by

$$\underset{M}{\mathrm{argmin}} \sum_{x \in C} |R(x) - M(I(x))|^2$$

where R(x) is the color value of a pixel x of the reference image R, I(x) is the color value of a pixel x of one image I of the first video and C is a set of pixels x within the images R and I.

3.  Method according to claim 2, wherein, before determining the color transformation matrix M, the image I is geometrically aligned on the reference image R and the color transformation matrix M is determined by

$$\underset{M}{\mathrm{argmin}} \sum_{x \in C} \left| R(x) - M(\tilde{I}(x)) \right|^2$$

where $\tilde{I}$ is the aligned image I of the first video.

4.  Method according to claim 3, wherein the images I and R are geometrically aligned by:

    - detecting at least one interest point in the reference image R and at least one interest point in the image I, and
    - matching said at least one interest point in the image I with said at least one interest point in the reference image R.

5.  Method according to any one of claims 2 to 4, wherein, if said first video is augmented by at least one additional element at a third date comprised between the first date and the second date, said at least one additional element modifying pixels of images of the first video, the set C comprises pixels other than said modified pixels.

6.  Method according to claim 1, wherein the determination of the color transformation matrix M comprises:

    - selecting a group of pixels of said at least one image of the first video according to a first selection criterion,
    - computing the mean gray level of the selected pixels of said at least one image of the first video;
    - selecting a group of pixels of said at least one reference image according to the first selection criterion,
    - computing the mean gray level of the selected pixels of said at least one reference image, and
    - determining the color transformation matrix from the mean gray level of the selected pixels of said at least one image of the first video and the mean gray level of the selected pixels of said at least one reference image.

7.  Method according to claim 6, wherein, if said first video is augmented by at least one additional element at a third date comprised between the first date and the second date, said at least one additional element modifying pixels of images of the first video, said modified pixels are excluded from the selected pixels of said at least one image of the first video.

8.  Device configured for displaying at least one image of a video representing a scene, said video being derived from a first video representing said scene acquired at a first date under first lighting conditions, the device comprising:

    - means for acquiring at least one image, called reference image, of said scene at a second date under second lighting conditions, said second date being subsequent to said first date,
    - means for determining a color transformation matrix M to be applied to the color values of pixels of at least one image of the first video, said color transformation matrix M being determined such that the deviation between the color values of the pixels of the transformed image and the color values of the pixels of said at least one reference image are lower than a predefined threshold,
    - means for applying said color transformation matrix to said at least one image of the first video in order to make the lighting conditions of the scene in the transformed image correspond substantially to the second lighting conditions, and
    - means for displaying the transformed image.

9.  Device according to claim 8, wherein the color transformation matrix M is determined by

$$\operatorname*{argmin}_{M} \sum_{x \in C} |R(x) - M(I(x))|^2$$

where R(x) is the color value of a pixel x of the reference image R, I(x) is the color value of a pixel x of one image I of the first video and C is a set of pixels x within the images R and I.

**10.** Device according to claim 9, wherein, before determining the color transformation matrix M, the image I is geometrically aligned on the reference image R and the color transformation matrix M is determined by

$$\operatorname*{argmin}_{M} \sum_{x \in C} \left|R(x) - M(\tilde{I}(x))\right|^2$$

where $\tilde{I}$ is the aligned image I of the first video.

**11.** Device according to claim 10, wherein the images I and R are geometrically aligned by:

- detecting at least one interest point in the reference image R and at least one interest point in the image I, and
- matching said at least one interest point in the image I with said at least one interest point in the reference image R.

**12.** Device according to any one of claims 9 to 11, wherein, if said first video is augmented by at least one additional element at a third date comprised between the first date and the second date, said at least one additional element modifying pixels of images of the first video, the set C comprises pixels other than said modified pixels.

**13.** Device according to claim 8, wherein the determination of the color transformation matrix M comprises:

- selecting a group of pixels of said at least one image of the first video according to a first selection criterion,
- computing the mean gray level of the selected pixels of said at least one image of the first video;
- selecting a group of pixels of said at least one reference image according to the first selection criterion,
- computing the mean gray level of the selected pixels of said at least one reference image, and
- determining the color transformation matrix from the mean gray level of the selected pixels of said at least one image of the first video and the mean gray level of the selected pixels of said at least one reference image.

**14.** Device according to claim 12, wherein, if said first video is augmented by at least one additional element at a third date comprised between the first date and the second date, said at least one additional element modifying pixels of images of the first video, said modified pixels are excluded from the selected pixels of said at least one image of the first video.

**15.** Computer program product comprising instructions of program code for executing steps of the method according to one of claims 1 to 7, when said program is executed on a computer.

Acquisition of a current reference image — S1

Determination of a color transformation matrix — S2

Application of the color transformation matrix to at least one image of the captured video — S3

Displaying the transformed image — S4

FIG.1

FIG.2

Europäisches
Patentamt

European
Patent Office

Office européen
des brevets

# EUROPEAN SEARCH REPORT

**Application Number**

EP 14 30 7011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/055645 A1 (ISHII TOSHIYUKI [JP]) 27 February 2014 (2014-02-27) | 1,2,5,8, 9,12,14, 15 | INV. H04N1/60 |
| Y | * abstract; claims 1,11 * <br> * figures 5,10,11A,11B * <br> * paragraph [0009] - paragraph [0010] * <br> * paragraph [0029] - paragraph [0051] * <br> * paragraph [0058] - paragraph [0067] * <br> * paragraphs [0079], [0084], [0085] * <br> ----- | 3,4,6,7, 10,11,13 | |
| Y | US 2004/056857 A1 (ZHANG ZHENGYOU [US] ET AL) 25 March 2004 (2004-03-25) <br> * abstract * <br> * paragraphs [0012], [0014], [0015] * <br> ----- | 3,4,10, 11 | |
| Y | US 2008/101690 A1 (HSU DE DZWO [US] ET AL) 1 May 2008 (2008-05-01) <br> * abstract * <br> * paragraph [0003] - paragraph [0008] * <br> ----- | 6,7,13 | |
| Y,D | JUN-YAN HUO ET AL: "Robust automatic white balance algorithm using gray color points in images", IEEE TRANSACTIONS ON CONSUMER ELECTRONICS, IEEE SERVICE CENTER, NEW YORK, NY, US, vol. 52, no. 2, 1 May 2006 (2006-05-01), pages 541-546, XP007903612, ISSN: 0098-3063, DOI: 10.1109/TCE.2006.1649677 <br> * the whole document * <br> ----- | 6,7,13 | TECHNICAL FIELDS SEARCHED (IPC) <br><br> H04N |

-/--

The present search report has been drawn up for all claims

| Place of search | Date of completion of the search | Examiner |
|---|---|---|
| The Hague | 9 June 2015 | Brans, Tim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 30 7011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YU Y ET AL: "recovering photometric properties of architectural scenes from photographs", COMPUTER GRAPHICS. SIGGRAPH 98 CONFERENCE PROCEEDINGS. ORLANDO, FL, JULY 19- 24, 1998; [COMPUTER GRAPHICS PROCEEDINGS. SIGGRAPH], ACM, NEW YORK, NY, US, 19 July 1998 (1998-07-19), pages 207-218, XP002258538, DOI: 10.1145/280814.280874 ISBN: 978-0-89791-999-9 * the whole document * ----- | 1,8 | |
| A | WO 2014/064327 A1 (NOKIA CORP [FI]) 1 May 2014 (2014-05-01) * page 11, line 6 - page 12, line 18 * * page 18, line 22 - line 33 * * page 19, line 12 - page 20, line 4 * ----- | 1,8 | |

TECHNICAL FIELDS
SEARCHED      (IPC)

The present search report has been drawn up for all claims

| Place of search | Date of completion of the search | Examiner |
|---|---|---|
| The Hague | 9 June 2015 | Brans, Tim |

## ANNEX TO THE EUROPEAN SEARCH REPORT
## ON EUROPEAN PATENT APPLICATION NO.

EP 14 30 7011

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2015

| Patent document cited in search report | | Publication date | Patent family member(s) | | Publication date |
|---|---|---|---|---|---|
| US 2014055645 | A1 | 27-02-2014 | JP 2014042117 A<br>US 2014055645 A1 | | 06-03-2014<br>27-02-2014 |
| US 2004056857 | A1 | 25-03-2004 | NONE | | |
| US 2008101690 | A1 | 01-05-2008 | CN 101529889 A<br>EP 2080359 A1<br>JP 2010508729 A<br>KR 20090074090 A<br>TW 200829038 A<br>US 2008101690 A1<br>WO 2008070348 A1 | | 09-09-2009<br>22-07-2009<br>18-03-2010<br>03-07-2009<br>01-07-2008<br>01-05-2008<br>12-06-2008 |
| WO 2014064327 | A1 | 01-05-2014 | US 2014122640 A1<br>WO 2014064327 A1 | | 01-05-2014<br>01-05-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HUO, J. Y. ; CHANG, Y. L. ; WANG, J. ; WEI, X. X.** Robust automatic white balance algorithm using gray color points in images. *IEEE Transactions on Consumer Electronics,* May 2006, vol. 52 (2), 541-546